Europäisches Patentamt

European Patent Office

Office européen des brevets

(11) Veröffentlichungsnummer: **0 310 700**

**A1**

(12) **EUROPÄISCHE PATENTANMELDUNG**

(21) Anmeldenummer: 87114748.4

(22) Anmeldetag: 09.10.87

(51) Int. Cl.⁴: **A47G 27/02 , B44C 3/08 , B32B 25/10**

(43) Veröffentlichungstag der Anmeldung:
12.04.89 Patentblatt 89/15

(84) Benannte Vertragsstaaten:
**AT BE CH DE ES FR GB GR IT LI LU NL SE**

(71) Anmelder: **Dupol-Rubbermaid GmbH Fabrik für Gummi- und Kunststofferzeugnisse**
**An der Trift 63**
**D-6072 Dreieich(DE)**

(72) Erfinder: **Kroll, Benjamin**
**Ringstrasse 4**
**D-6080 Gross-Gerau(DE)**

(74) Vertreter: **Schaafhausen, Ludwig Richard,**
**Dipl.-Phys. et al**
**KEIL & SCHAAFHAUSEN Patentanwälte**
**Eysseneckstrasse 31**
**D-6000 Frankfurt am Main 1(DE)**

(54) Verfahren zur Herstellung eines Dekors auf Gummimatten.

(57) Es wird ein Verfahren zur Herstellung eines Dekors auf Gummimatten, insbesondere für Badewannen- und Duschmatten beschrieben, bei dem das Dekor auf ein flexibles Material gedruckt ist, das auf der Gummimatte aufgebracht wird. Um eine gute Haftung des Dekors auf der Gummimatte zu erreichen, ohne daß das Motiv zerstört wird, auch wenn das Motiv nur einen Teil der Gummimatte bedeckt, ist vorgesehen, daß ein aus einem flexiblen, hitzebeständigen Material bestehendes bedrucktes Dekor in eine Preßform eingelegt wird, daß darauf ein oder mehrere Gummiplatten bzw. -scheiben gelegt werden, und daß die Gummiplatten bzw. -scheiben unter Hitze und Druck in Mattenform gepreßt werden.

## Verfahren zur Herstellung eines Dekors auf Gummimatten

Die Erfindung betrifft ein Verfahren zur Herstellung eines Dekors auf Gummimatten, insbesondere für Badewannen- und Duschmatten, wobei das Dekor auf ein flexibles Material gedruckt ist, das auf der Gummimatte aufgebracht wird.

Gummimatten werden im Badezimmerbereich verwendet, um ein Ausrutschen in einer Badewanne bzw. einer Dusche zu verhindern. Dafür weisen die Gummimatten auf ihrer Unterseite häufig Saugnäpfe auf und ihre Oberfläche ist so gestaltet, daß sie sowohl ein Rutschen verhindert als auch hautsympathisch ist. Darüberhinaus weist die Oberfläche häufig eine Musterung auf, die einen zusätzlichen Anti-Rutsch-Effekt bewirkt.

Um Badewannen- und Duschmatten lustiger zu gestalten, ist bereits der Versuch unternommen worden, Bildmotive auf den Gummimatten aufzubringen. Gemäß einem bekannten Verfahren wird dabei in ein Werkzeug eine bedruckte Textileinlage gelegt, die über die gesamte Fläche der Badewannen- oder Duschmatte reicht. Danach wird die Gummimatte durch Spritzen oder durch Transfer-Spritzpressen hergestellt. Diese Verfahren haben für die Herstellung eines Dekors erhebliche Nachteile. So hat es sich gezeigt, daß beim Spritzen oder Transferspritzpressen der Matte keine sichere Verbindung zwischen der Textileinlage mit dem Gummi hergestellt wird, so daß sich die Textileinlage mit dem bedruckten Dekor bereits sehr schnell wieder löst. Auch ist es nicht möglich, nur Teile der Gummimatte mit einem Dekor zu versehen, da sich die Textileinlage während des Spritzvorganges in dem Werkzeug verschiebt. Folglich bedecken die als Dekor dienenden Textileinlagen der bekannten Gummimatten deren gesamte Oberfläche, wodurch die Anti-Rutsch-Wirkung der Gummimatte stark beeinträchtigt wird.

Es ist daher bereits versucht worden, bunte Dekore durch Bedrucken auf einer Gummimatte aufzubringen. Da die Farbe aber bereits nach kürzester Zeit wieder abspringt, insbesondere aufgrund der starken Belastungen, die diese Matte in einer Badewanne oder Dusche ausgesetzt ist, bekommen die so dekorierten Gummimatten häufig bereits bald nach ihrer ersten Benutzung ein unansehnliches Aussehen.

Ebenso ist bereits versucht worden, thermoplastische Folien in einem nachgeschalteten Arbeitsgang d.h. auf eine bereits ausgepreßte Gummimatte - mittels Hitze, Dampf und Druck aufzubringen. Auch durch dieses Verfahren wurde keine ausreichende Verbindung zwischen Dekorteil und Gummimatte erreicht.

Aufgabe der vorliegenden Erfindung ist es daher, ein Verfahren der eingangs genannten Art zur Herstellung eines Dekors auf Gummimatten zu schaffen, bei denen das Dekor sicher auch bei härtester Beanspruchung haftet und auch nur Teile der Oberfläche einer Gummimatte mit einem Dekor versehen werden können.

Diese Aufgabe wird erfindungsgemäß dadurch gelöst, daß ein aus einem flexiblen, hitzebeständigen Material bestehendes bedrucktes Dekor in eine Preßform eingelegt wird, daß darauf ein oder mehrere Gummiplatten bzw. -scheiben ("Felle") gelegt werden, und daß die Gummiplatten bzw. -scheiben unter Hitze und Druck in Mattenform gepreßt werden. Mit einem derartigen Verfahren lassen sich beliebig geformte Dekore auf Teilen einer Gummimatte bzw. der gesamten Gummimatte aufbringen und, da durch den Preßvorgang das flexible, hitzebeständige Material mit dem Gummi eine enge Verbindung eingeht, ist gewährleistet, daß das Dekor auch bei stärkster Beanspruchung auf der Gummimatte haften bleibt. Der gleiche technische Erfolg wird auch erreicht, wenn zunächst ein oder mehrere Gummiplatten bzw. -scheiben ("Felle") in die Preßform eingelegt werden, darauf ein aus einem flexiblen, hitzebeständigen Material bestehendes bedrucktes Dekor gelegt wird und die Felle danach unter Hitze und Druck in Mattenform gepreßt werden.

Gemäß einer besonders vorteilhaften Ausgestaltung der Erfindung wird als flexibles, hitzebeständiges Material eine textile Einlage verwendet, bei der es sich gezeigt hat, daß sie als Mittler zwischen dem Gummi und der Farbe wirkt, mit der das Motiv auf der Textileinlage aufgedruckt ist. Die Verwendung einer textilen Einlage ist aber auch aus antistatischen Gründen vorteilhaft. Außerdem treten keine starken mechanischen Scherkräfte auf.

Ganz besonders vorteilhaft wird das erfindungsgemäße Verfahren, wenn als Gummiplatten bzw. -scheiben flach auskalandrierte Gummistücke, sogenannte "Felle" verwendet werden. Während bei dem bekannten Verfahren, bei dem Gummi in eine Form fließt, das Motiv bereits während dieses Verfahrensabschnittes häufig zerrissen wird, braucht bei der Verwendung von besagten "Fellen" die Gummimatte nicht vollständig mit der Textileinlage belegt zu werden, auf der das Bildmotiv aufgedruckt ist.

Das erfindungsgemäße Verfahren kann so durchgeführt werden, daß zunächst flach auskalandrierte Gummistücke (sogen. "Felle") hergestellt werden. Diese "Felle" können aber auch bereits extrudiert werden. Danach wird in ein Werkzeug eine bedruckte Textileinlage gelegt, die als Dekor für die Gummimatte dienen soll. Auf die Textileinlage werden ein oder mehrere "Felle" gelegt und zusammen mit der Textileinlage unter Hitze und Druck in die gewünschte Gummimattenform gepreßt. Während dieses Preßvorganges wird die Textileinlage von dem Gummi derart durchdrungen, daß eine sehr gute Haftung des Dekors an der Gummimatte erreicht wird, ohne daß dadurch das Motiv zerstört wird. Das Verfahren kann aber auch so ausgeführt werden, daß zunächst ein oder mehrere Gummiplatten bzw. -scheiben ("Felle") in die Preßform eingelegt werden, darauf ein aus einem flexiblen, hitzebeständigen Material bestehendes bedrucktes Dekor gelegt wird und die Felle danach unter Hitze und Druck in Mattenform gepreßt werden.

## Ansprüche

1. Verfahren zur Herstellung eines Dekors auf Gummimatten, insbesondere für Badewannen- und Duschmatten, wobei das Dekor auf ein flexibles Material gedruckt ist, das auf der Gummimatte aufgebracht wird, dadurch gekennzeichnet, daß ein aus einem flexiblen, hitzebeständigen Material bestehendes bedrucktes Dekor in eine Preßform eingelegt wird, daß darauf ein oder mehrere Gummiplatten bzw. -scheiben ("Felle") gelegt werden, und daß die Gummiplatten bzw. -scheiben unter Hitze und Druck in Mattenform gepreßt werden.

2. Verfahren zur Herstellung eines Dekors auf Gummimatten, insbesondere für Badewannen- und Duschmatten, wobei das Dekor auf ein flexibles Material gedruckt ist, das auf der Gummimatte aufgebracht wird, dadurch gekennzeichnet, daß ein oder mehrere Gummiplatten bzw. -scheiben ("Felle") in eine Preßform eingelegt werden, daß darauf ein aus einem flexiblen, hitzebeständigen Material bestehendes bedrucktes Dekor auf die Felle gelegt wird, und daß die Felle unter Hitze und Druck in Mattenform gepreßt werden.

3. Verfahren nach Anspruch 1 oder 2, dadurch gekennzeichnet, daß als flexibles, hitzebeständiges Material eine textile Einlage verwendet wird.

4. Verfahren nach Anspruch 1 oder 2, dadurch gekennzeichnet, daß als Gummiplatten bzw. -scheiben ("Felle") flach auskalandrierte Gummistücke verwendet werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | BE-A- 390 933 (E. BEMELMANS) <br> * Insgesamt * | 1,2,4 | A 47 G 27/02 <br> B 44 C 3/08 <br> B 32 B 25/10 |
| Y | | 3 | |
| | --- | | |
| X | US-A-2 619 753 (BONAFIDE MILLS, INC.) <br> * Insgesamt * | 1,2 | |
| | --- | | |
| Y | BE-A- 415 066 (HUNGARIA GUTTAPERCHOU ES GUMMIARUGYAR) <br> * Insgesamt * | 3 | |
| A | | 1,2,4 | |
| | --- | | |
| Y | DE-A-1 654 157 (PHOENIX GUMMIWERKE) <br> * Insgesamt * | 1-4 | |
| | --- | | |
| Y | BE-A- 519 885 (H.E. FREY) <br> * Insgesamt * | 1-4 | |
| | --- | | |
| Y | DE-C- 544 930 (ALLGEMEINE ELEKTRICITÄTS-GESELLSCHAFT) <br> * Insgesamt * | 1-4 | |
| | --- | | **RECHERCHIERTE SACHGEBIETE (Int. Cl.4)** |
| Y | AU-A- 418 730 (DUNLOP RUBBER AUSTRALIA LTD) <br> * Insgesamt * | 1-4 | A 47 G <br> A 47 L <br> B 29 C |
| | --- | | |
| A | FR-A-2 251 433 (S.A. AUTOMOBILES CIRÖEN) <br> * Insgesamt * | 1-4 | B 29 D <br> B 32 B <br> B 44 C |
| | --- | | |
| A | US-A-2 807 564 (R.L. MITCHELL) <br> * Insgesamt * | 1-4 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 09-06-1988 | GOURIER P.A. |